# EUROPÄISCHE PATENTSCHRIFT

(11) **EP 2 092 206 B1**
(45) Veröffentlichungstag und Bekanntmachung des Hinweises auf die Patenterteilung: **04.04.2012**
(21) Anmeldenummer: 07820914.5
(22) Anmeldetag: 04.10.2007
(51) Int. Cl.: F16D 23/06

(54) **SCHIEBEMUFFE EINER SYNCHRONISIERVORRICHTUNG**
SLIDING SLEEVE OF A SYNCHRONIZING DEVICE
MANCHON COULISSANT D'UN DISPOSITIF DE SYNCHRONISATION

(30) Priorität: 14.11.2006 DE 102006053495
(43) Veröffentlichungstag der Anmeldung: 26.08.2009
(73) Patentinhaber: Schaeffler Technologies AG & Co. KG, 91074 Herzogenaurach (DE)
(72) Erfinder: MARTIN, Reiner, 96178 Pommersfelden (DE); SPOERL, Marcus, 91126 Rednitzhembach (DE)
(86) Internationale Anmeldenummer: PCT/EP2007/060537
(87) Internationale Veröffentlichungsnummer: WO 2008/058812

(56) Entgegenhaltungen:
- EP-A- 1 298 340
- DE-A1- 2 120 166
- DE-A1- 10 138 358
- FR-A- 2 803 640
- FR-A- 2 853 377
- JP-A- 1 172 659

## Beschreibung

### Gebiet der Erfindung

Die Erfindung betrifft eine Synchronisiervorrichtung eines Zahnräderwechselgetriebes, die eine Schiebemuffe mit einer Schiebemuffenverzahnung, einen Synchronkörper mit einer Außenverzahnung und ein oder mehrere Rastelemente aufweist, die jeweils zwischen der Schiebemuffe und dem Synchronkörper verrastbar sind sowie eine Schiebemuffe für eine derartige Synchronisiervorrichtung.

### Hintergrund der Erfindung

In modernen handgeschalteten Getrieben werden Synchronisiereinrichtungen eingesetzt, um auf komfortable Art ein Schalten zwischen den einzelnen Gangstufen zu ermöglichen. Beim Schaltvorgang wird mittels verschiedener Elemente der Synchronisiereinrichtung die Umfangsgeschwindigkeit eines Gangrads der Umfangsgeschwindigkeit der Getriebewelle angepasst und dann eine formschlüssige Verbindung zwischen der Getriebewelle und diesem Gangrad hergestellt. Durch einen Synchronkörper sind die Getriebewelle und eine Schiebemuffe der Synchronisiereinrichtung drehfest miteinander verbunden. Dies erfolgt in der Regel dadurch, dass einerseits ein am Innenumfang des Synchronkörpers ausgebildetes Keilprofil als Innenverzahnung mit der Getriebewelle verbunden ist und andererseits die Schiebemuffe auf einer am Außenumfang des Synchronkörpers ausgebildeten Außenverzahnung entlang der Längsmittelachse der Getriebewelle verschiebbar ist. Weiterhin dient der Synchronkörper je nach seiner Ausführung als Anschlags- und Führungselement für Synchronringe bzw. Reibringe.

Der Synchronkörper ist häufig mit in gleichmäßigen Abständen an seinem Außenumfang ausgearbeiteten Aufnahmen für Arretierelemente wie Rastbolzen, Rastkugeln oder Druckstücke versehen. Die Rastelemente halten die Schiebemuffe in ihrer Mittelstellung, wenn kein Gangrad geschaltet ist. Dabei sind die Rastelemente unter Federvorspannung in eine Rast- oder Riegelnut der Schiebemuffe gepresst, oder das Rastelement wirkt auf ein Druckstück, das wiederum in einer Rastnut der Schiebemuffe aufgenommen ist.

Bei derartigen Synchronisiervorrichtungen dienen die in den Aufnahmen des Synchronkörpers angeordneten Druckstücke während eines Schaltvorgangs zum Vorsynchronisieren, d.h. zur Bewegung des jeweiligen Synchronrings gegen eine Reibfläche des benachbarten Kupplungskörpers oder eines Zwischenrings bei z. B. Mehrfachkonussynchronisationen. Je nach Ausführung der Synchronisiereinrichtung wird das Druckstück entweder direkt beispielsweise mittels Federn oder durch einen vorgespannten Rastbolzen bzw. eine Rastkugel in eine Rastnut in der Schiebemuffe vorgespannt. Wird die Schiebemuffe zur Gangwahl axial bewegt, so wird über die innere Kontur ihrer Rastnut das Druckstück axial gegen den Synchronring geschoben. Der Synchronring wird dadurch gegen die Reibfläche gepresst.

Synchronkörper nach dem Stand der Technik werden entweder spanabhebend oder spanlos gefertigt. Für die spanlose Fertigung von Synchronkörpern wird als Ausgangsmaterial in der Regel Blech oder Bandmaterial verwendet, das durch Trennen und Umformen in seine bestimmungsgemäße Form gebracht wird. Dabei ist die Dicke des Ausgangsmaterials und dessen Gewicht durch funktionelle Erfordernisse und die erforderliche Festigkeit des Fertigungsteils bestimmt. Die in einem Umformverfahren gefertigte Synchronkörper können in der Massenfertigung sehr material- und zeitsparend hergestellt werden. Die Kosten für ihre Fertigung sind daher gering. Derartig ausgeführte Synchronkörper haben sich bisher wenig durchgesetzt, da unter anderem die Kosten für die Herstellung der Formwerkzeuge hoch sind und sich erst bei der Fertigung von größeren Stückzahlen rentieren. Außerdem bietet die relativ dünnwandige Ausbildung derartiger Synchronkörper wenig Raum für die Gestaltung komplex ausgebildeter und damit den hohen Anforderungen moderner Synchronisiereinrichtungen angepasster Formen. Ferner sind die spanlos hergestellten Synchronkörper bislang nicht in der Lage, die hohen Drehmomente moderner Brennkraftmaschinen zu übertragen. Synchronisiervorrichtungen mit einem derartigen Synchronkörper haben sich daher bisher nicht durchgesetzt.

Die spanabhebende Fertigung von Synchronkörpern ist aufwändig und kostenintensiv. Es werden dabei Rohlinge durch verschiedene spanabhebende Bearbeitungsverfahren in ihre endgültige Form gebracht. Besonders zeit- und kostenaufwändig ist dabei die Gestaltung der Außenverzahnung und der bereits beschriebenen Aufnahmen für die Rastelemente. Die Aufnahmen werden z. B. durch Räumen oder Bohren aus dem vollen Material des Rohlings ausgearbeitet. Von Nachteil ist weiterhin, dass die Aufnahmen für die Druckstücke tief in den Synchronkörper ragen. In diesem Bereich besitzt er eine verminderte Festigkeit, so dass er relativ groß dimensioniert sein muss, um in jeder Situation die bei neueren Brennkraftmaschinen immer größer werdenden Momente aufnehmen zu können. Die Aufnahmen können nicht beliebig klein ausgebildet werden, da das Druckstück eine Mindestgröße aufweisen muss und sicher gehalten werden muss. Zudem kann die Schiebemuffe der Synchronisiereinrichtung, wenn das Druckstück aus dem Synchronkörper weiter herausragt, um die Aufnahmen kleiner zu gestalten, leicht unter Krafteinwirkung verkippen, da die Führung über das Druckstück keine zentrierende Wirkung hat.

Die Aufnahmen am Synchronkörper können kleiner ausfallen, wenn das Druckstück - wie in JP 01 172659 A beschrieben - in der Schiebemuffe gehalten wird. Die Schiebemuffe ist massiv und schwer. Eine gattungsgemäße Synchronisiervorrichtung ist in FR 2 803 640 A1 offenbart.

Synchronisiervorrichtungen des Standes der Technik können bei häufigen Schaltvorgängen zudem verschleißen, da bei jedem Schaltvorgang aus einem geschalteten Gang in die Neutralstellung der auf der gegenüberliegenden Seite des zuvor geschalteten Gangrads angeordnete Synchronring ansynchronisiert wird, wenn aufgrund der Schaltbewegung das Arretierelement nicht sofort in der Neutralstellung einrastet. Ferner neigen Synchronisiervorrichtungen nach dem Stand der Technik beim Gangwechsel in einen höheren Gang zu so genanntem "Hochschaltkratzen".

### Zusammenfassung der Erfindung

Aufgabe der Erfindung ist es daher, eine Synchronisiervorrichtung zu schaffen, welche die vorstehend bezeichneten Nachteile des Standes der Technik vermeidet sowie eine Schiebemuffe zu schaffen, die verkippsicher und verschleißarm ist und die es ermöglicht, in einer Synchronisiervorrichtung einen einfach zu fertigenden, hohe Drehmomente übertragenden, kompakten Synchronkörper zu verwenden.

Die Aufgabe wird nach dem kennzeichnenden Teil des Anspruchs 1 dadurch gelöst, ein oder mehrere Aufnahmen für Arretierelemente am Innenumfang der Schiebemuffe angeordnet sind, welche zumindest in Neutralstellung des Zahnräderwechselgetriebes in am Synchronkörper ausgebildete Rastnuten eingreifen.

Die Schiebemuffe wird vorteilhafterweise spanlos in Umformtechnik gefertigt, so dass das Einbringen von zusätzlichen Aufnahmen für die Arretierelemente den Herstellungsaufwand nicht oder nur minimal erhöht. Die Aufnahmen selbst können dabei als Ausnehmungen, Durchgangsausnehmungen oder als zahnloser Abschnitt mit einem Haltemechanismus ausgebildet sein. Dies ermöglicht die Verwendung eines massiven Synchronkörpers, der in nur wenigen, unaufwändigen Schritten bearbeitet werden muss, da auf das Räumen von Material für die Aufnahmen der Arretierelemente verzichtet werden kann. Weil die tiefen Ausnehmungen entfallen, kann der Grundkörper des Synchronkörpers auf seiner äußeren zylindrischen Mantelfläche vollumfänglich geschlossen ausgebildet sein. Vorteilhaft bei derartig ausgebildeten Synchronkörpern ist deren hohe Festigkeit unter Last.

Die erfindungsgemäße Lösung ermöglicht weiterhin, dass ein Zurückschalten aus einem geschalteten Gang in Neutralstellung nicht dazu führt, dass die gegenüberliegende Gangseite ansynchronisiert wird. Weil das Arretierelement fest mit der Schiebemuffe verbunden ist, kann die Gegenseite nicht ansynchronisiert werden, was einen verminderten Verschleiß zur Folge hat.

In einer Variante der Erfindung weist die Schiebemuffenverzahnung am Umfang verteilt mehrere Aufnahmen für die Arretierelemente auf. Die Aufnahmen können in einfacher Weise eine rechteckige Form aufweisen und noch vor dem Biegen zur Kreisform in das Verzahnungsband gestanzt werden. Die Arretierelemente werden dann in der Aufnahme fixiert, wobei sie entweder stoffschlüssig beispielsweise durch Schweißen oder Kleben unlösbar mit der Schiebemuffe verbunden werden oder formschlüssig durch Verwendung eines Presssitzes oder eines Verschnappmechanismus' fixiert werden.

In einer Weiterbildung weist die Schiebemuffe axial von den Aufnahmen nach außen gerichtet verkürzte Zähne auf. Dabei weisen die verkürzten Zähne außenseitig die gleiche Zahnkontur auf wie die übrigen Zähne. Damit besitzt die Schiebemuffe die volle Zähnezahl an ihrem Umfang und kann somit höhere Kräfte auf den Kupplungskörper übertragen als ohne diese verkürzten Zähne.

Die Erfindung ermöglicht weiterhin eine kostengünstige Montage, da die Schiebemuffe mit den Arretierelementen als Einheit verliersicher verbaut werden kann. Die Arretierelemente besitzen in einer Weiterbildung nach radial innen gerichtete Erhöhungen und die korrespondierenden Rastnuten Vertiefungen. Die Erhöhungen und die Vertiefungen greifen in der Neutralstellung ineinander, was zu einer Eigenzentrierung der Synchronisiervorrichtung führt. Diese Zentrierung durch die Arretierelemente ermöglicht einen Verzicht der Zentrierung durch das Schaltgestänge und erleichtert zudem die Montage.

Die Schiebemuffenverzahnung ist umfangsseitig nach innen orientiert und vorzugsweise aus Bandmaterial hergestellt. Ihre Zähne können somit eine komplexe Form aufweisen, ohne dass es aufwendiger Herstellungsschritte bedarf. Je nach gewünschter Anwendung sind sie hinterschnitten, weisen Dachspitzen auf oder sind unterschiedlich breit, um beispielsweise eine Verdrehsicherung zu garantieren, oder unterschiedlich lang, um eine sichere Führung in Axialrichtung zu gewährleisten.

In einer Weiterbildung der Erfindung besteht der Synchronkörper aus einem Grundkörper und einem Verzahnungsband aus Blech. Der Grundkörper des Synchronkörpers wird in vorteilhafter Weise als Scheibe oder zylindrischer Körper hergestellt, welche keine komplexen äußeren Geometrien besitzen müssen und somit kostengünstig zu fertigen sind. Er besteht aus Massivmaterial, ist vorzugsweise geschmiedet oder gesintert und ermöglicht es, hohe Drehmomente zu übertragen. Der Grundkörper kann entweder einteilig aufgebaut sein, oder er besteht aus mehreren Teilen, beispielsweise ringförmigen Scheiben, welche eine jeweils unterschiedliche Dicke aufweisen. Dabei ist eine innere Scheibe mit einer Innenverzahnung versehen, welche mit der Welle kuppelt. Die äußere Scheibe kann durch mehrere Scheibensegmente oder durch einen Steg ersetzt werden. Idealerweise weist der Grundkörper radial außenseitig die Gestalt einer Zylinderoberfläche auf. Diese ist besonders leicht zu fertigen, da in diese keine zusätzlichen Aufnahmen für die Arretierelemente eingebracht werden müssen.

Die Außenverzahnung kann mit dem Grundkörper als einteiliges Bauteil ausgeführt werden. Sie wird dann durch spanabhebende Bearbeitung am Außenumfang eingebracht. Die Außenverzahnung kann auch durch einen mit dem Grundkörper verbundenen Ringteil ausgebildet sein. Dieses wird in einem spanlosen Verfahren aus einem Verzahnungsband gefertigt. Hierbei können auch aufwändige Geometrien durch Umformverfahren sehr kostengünstig realisiert werden.

Weiterhin weist der Synchronkörper ein oder mehrere als Rastnuten bezeichnete Rampenkonturen auf. Im verbauten Zustand wirken die auf der Schiebemuffe angeordneten Arretierelemente mit diesen zusammen. Gemäß einer Weiterbildung der Erfindung sind die Rastnuten nicht auf den Zähnen ausgebildet, sondern im Zahnfuß bzw. zwischen den Zähnen der Außenverzahnung. Es kann auch das Verzahnungsband an diesen Stellen entfallen und die Rastkontur direkt im Grundkörper eingebracht sein. Dadurch ist der Abstand der Rastnuten von der Schiebemuffe vergrößert, und die Arretierelemente können einen größeren Hub aufweisen bzw. die radiale Bauhöhe kann vermindert werden.

Gemäß der Erfindung weist eine erfindungsgemäße Synchronisiervorrichtung einen Synchronring auf, mittels dessen durch die Arretierelemente die Vorsynchronisierung eingeleitet wird. Während einer Schaltvorganges wird die Schiebemuffe durch das Schaltgestänge in Richtung des Synchronrings so weit verschoben, bis das Arretierelement auf eine auf dem Synchronring angeordnete Vorsynchronisierungsrampe trifft. Gemäß der Erfindung weist das Arretierelement eine Rastierschräge auf, so dass die Rampe und die Rastierschräge sich flächenhaft abstützen können und somit der Vorsynchronisierungsprozess sicher eingeleitet werden kann.

Die schräge Rampenkontur des Synchronrings ermöglicht es weiterhin, dass das so genannte "Hochschaltkratzen" verringert wird, da durch die Schräge der Synchronaußenring in jeder Synchronisationsphase ständig durch die Arretierung auf die anderen Reibkonen gedrückt wird. Als Arretierelement eignet sich ein im Wesentlichen rechteckiger Deckel, der in einem unbeweglichen Boden-. element in Wannenform mit Seitenwänden geführt ist und mittels einer Feder gegen dieses vorgespannt ist. Die Seitenwände können in einer Fortbildung der Erfindung abgewinkelt sein und parallel zum Grundband der Schiebemuffe mit einem geringen Abstand verlaufen. Sollten Kräfte die Schiebemuffe zu verkippen versuchen, kann sich die Schiebemuffe über die Abwinklungen der Seitenwände des Arretierelements am Synchronkörper zusätzlich abstützen. Die Arretierung kann auch ohne Boden realisiert werden, indem der Deckel mit der Feder in der Schiebemuffenaussparung fixiert werden, so dass sich eine Bauteilersparnis ergibt.

Die Arretierung kann weiterhin als Endanschlag zur Begrenzung des Verschiebewegs dienen und/oder eine Indexierungsfunktion übernehmen. Zusammenfassend ermöglicht die Synchronisiervorrichtung der Erfindung die Übertragung eines sehr hohen Drehmoments bei gleichzeitiger Bauraumoptimierung sowie einer Verringerung des Herstellungsaufwands und einer Komfortverbesserung.

### Kurze Beschreibung der Zeichnungen

Die Erfindung wird nachstehend anhand von Ausführungsbeispielen näher erläutert. Die dazugehörigen Zeichnungen zeigen:
- Figur 1: einen Längsschnitt eines Teils einer Synchronisiervorrichtung des Standes der Technik,
- Figur 2: eine perspektivische Schrägansicht einer längs geschnittenen, erfindungsgemäßen Synchronisiervorrichtung,
- Figur 3a: eine perspektivische Schrägansicht der Schiebemuffe mit einem Arretierelement nach Figur 2,
- Figur 3b: einen Querschnitt der Schiebemuffe nach Figur 2,
- Figur 4: eine perspektivische Schrägansicht der Schiebemuffe ohne ein Arretierelement nach Figur 2,
- Figur 5: eine perspektivische Schrägansicht des Synchronrings nach Figur 2,
- Figur 6: eine vergrößerte, perspektivische Schrägansicht des Arretierelements nach Figur 2.

### Ausführliche Beschreibung der Zeichnungen

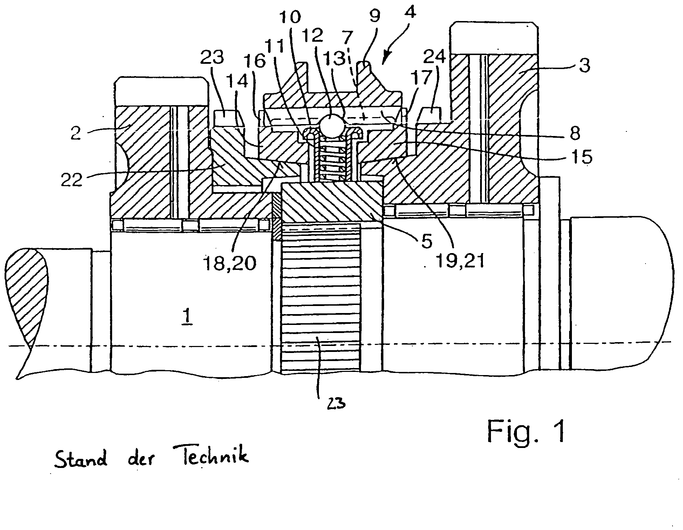

Figur 1 stellt eine Synchronisiervorrichtung 4 gemäß dem Stand der Technik dar. Auf einer Welle 1 eines Schaltgetriebes für Kraftfahrzeuge sind zwei Gangräder 2 und 3 frei drehbar gelagert. Zwischen diesen beiden Gangrädern 2 und 3 ist eine Synchronisiervorrichtung 4 angeordnet, über welche wahlweise eines der beiden Gangräder 2 oder 3 an die Welle 1 kuppelbar ist. Auf diese Weise wird das Schaltgetriebe in unterschiedliche Übersetzungsstufen geschaltet.

Die Synchronisiervorrichtung 4 weist einen Synchronkörper 5 auf, der mit einer Innenverzahnung 23 drehfest in die Welle 1 eingreift. Weiterhin ist der Synchronkörper 5 an seinem äußeren Umfang mit einer Außenverzahnung 7 versehen, in welche Zähne 8 einer Schiebemuffenverzahnung 6 einer Schiebemuffe 9 eingreifen. Im Synchronkörper 5 ist weiterhin ein Arretierelement 10 mit einer Druckfeder 11 geführt, das ein kugelförmiges, in Längsrichtung über das Arretierelement 10 vorstehendes Rastelement 12 aufnimmt. Das kugelförmige Rastelement 12 ragt dabei aus dem Synchronkörper 5 bis etwa zum Kopfkreis der Außenverzahnung 7 vor. In einer Neutralstellung der Synchronisiereinrichtung 4, in der keine der beiden möglichen Gangstufen geschaltet ist und sich somit die beiden Gangräder 2 und 3 frei gegenüber der Welle 1 drehen, greift das Rastelement 12 in eine in der Innenverzahnung 8 der Schiebemuffe 9 ausgebildete Rastnut 13 ein.

Beiderseits des Arretierelements 10 sind Synchronringe 14 und 15 angeordnet, die außen eine Sperrverzahnung 16 und 17 und innen eine Reibfläche 18 und 19 aufweisen. Die Reibflächen 18 und 19 der Synchronringe 14 und 15 wirken zusammen mit entsprechend ausgebildeten Reibflächen 20 und 21, welche am Gangrad 3 sowie einem drehfest mit dem Gangrad verbundenen Kupplungsring 22 ausgebildet sind.

Während eines Schaltvorgangs wird bei einer entsprechenden Sperrsynchronisierung über das Arretierelement 10 zunächst während des Ansynchronisierens eine axiale Kraft auf den jeweiligen Synchronring 14 oder 15 ausgeübt, so dass dieser über seine Reibfläche 18 oder 19 von der entsprechenden Reibfläche 20, 21 mitgenommen und gegenüber dem Synchronkörper 5 um einen bestimmten Winkel verdreht wird. In dieser Lage sperrt die Sperrverzahnung 16 eine weitere Verschiebung der Schiebemuffe 9. Diese Sperrwirkung wird erst dann aufgehoben, wenn ein Gleichlauf zwischen dem jeweiligen Gangrad 2 bzw. 3 und der Welle 1 erzielt ist. In diesem Moment wird die Schiebemuffenverzahnung 6 durch die Sperrverzahnung 16 bzw. 17 hindurch bewegt und gelangt schließlich in den Eingriff in eine Kuppelverzahnung 22a bzw. 22b.

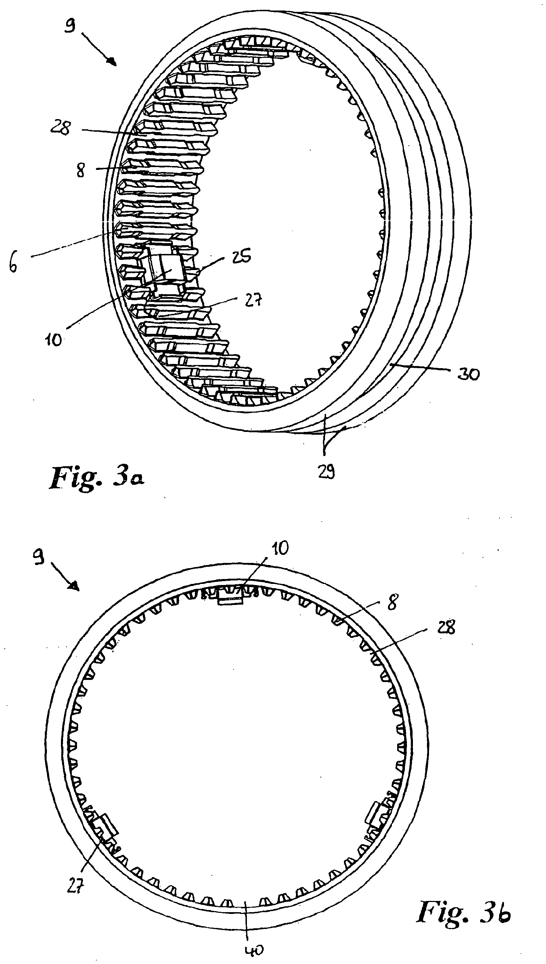

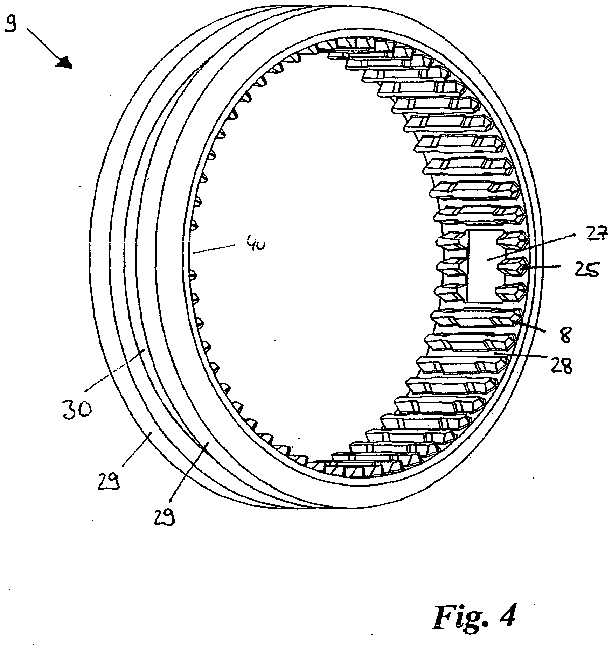

Die Figuren 3a, 3b und 4 zeigen eine erfindungsgemäße Schiebemuffe 9. Sie weist eine radial nach innen orientierte Schiebemuffenverzahnung 6 aus Bandmaterial mit hinterschnittenen Zähnen 8 und dazwischen liegenden Zahnzwischenräumen 28 auf. Die Schiebemuffenverzahnung 6 ist außenseitig von Stützringen 29 begrenzt, welche eine Nut 30 zur Führung einer nicht dargestellten Schaltgabel bilden und mit der Schiebemuffenverzahnung 6 verschweißt sind. Die Schiebemuffe 9 weist drei am Umfang verteilte und somit um jeweils 120° versetzte Aufnahmen 27 für Arretierelemente 10 auf. An die Aufnahmen 27 schließen sich axial außenseitig verkürzte Zähne 25 an. Die verkürzten Zähne 25 weisen außenseitig das gleiche Profil auf wie die unverkürzten Zähne 8.

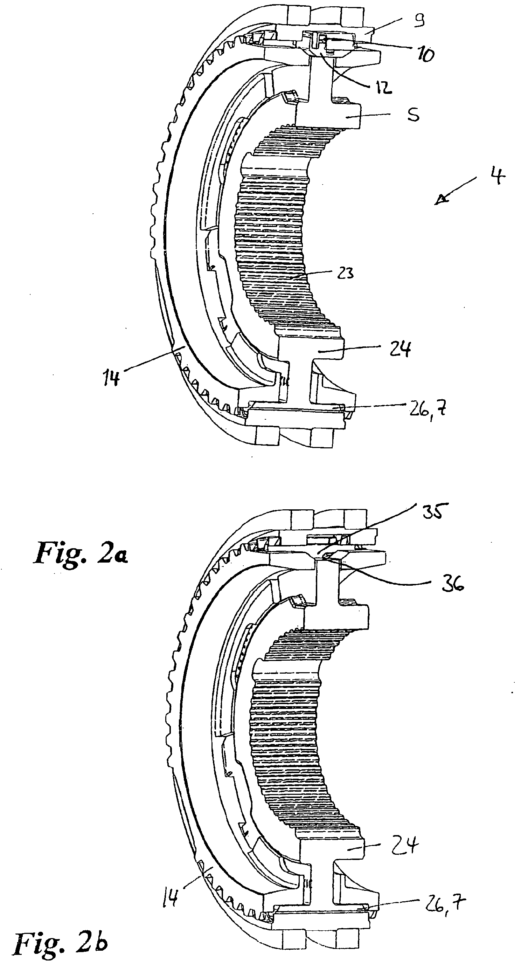

Die Figuren 2a und 2b zeigen einen Teil einer erfindungsgemäßen Synchronisiervorrichtung 4 mit einem Synchronkörper 5, einer Schiebemuffe 9 und einem Synchronring 14. Der Synchronkörper 5 weist einen Grundkörper 24 und ein Ringteil 26 mit einer Außenverzahnung 7 auf. Der Grundkörper 24 ist aus Massivmaterial hergestellt und weist eine Innenverzahnung 23 auf, über die er mit der Welle 1 drehfest verbunden ist. Seine Außenwand 36 ist radial umlaufend und weist bis auf die Rastnuten 13 nahezu eine Zylinderoberfläche mit einem konstanten Durchmesser auf.

Die Außenverzahnung 7 ist in drei Verzahnungssegmente 37, 37', 37" unterteilt, welche durch Lücken 35 voneinander beabstandet sind. Die Verzahnungssegmente 37, 37', 37" sind rückseitig der Kontur der Außenwand 36 des Synchronkörpers 5 angepasst. Auf den Verzahnungssegmenten 37, 37', 37" können Anschläge ausgebildet sein, die als Verdrehsicherungen eine nicht korrekte Montage verhindern oder auch als Begrenzung für den axialen Verschiebeweg der Schiebemuffe 9 dienen können. In der Schiebemuffenverzahnung 6 ist eine Fehlstelle 40 angeordnet, die mit dem Anschlag des Synchronkörpers 5 zusammenwirkt.

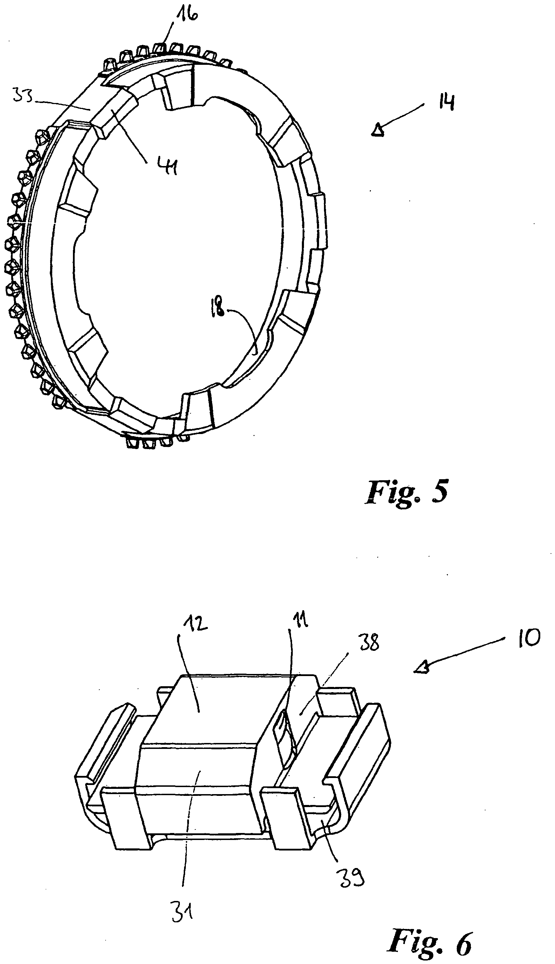

Die Lücken 30 des Synchronkörpers 5 weisen ein Profil auf, das als Rastnut 13 mit dem Arretierelement 10 der Schiebemuffe 9 zusammenwirkt. Das Arretierelement 10 (Figur 6) baut besonders flach, so dass die die Rastnuten sehr flach ausgebildet sein können. In der Neutralstellung sind Schiebemuffe 9 und Synchronkörper 5 in der gleichen, zur Welle senkrechten Ebene angeordnet. Wird die Schiebemuffe axial verschoben und ist der Kopfkreis der Dachverzahnung hinreichend schräg, wird ein Verkippen der Schiebemuffe 9 vermieden.

Das Arretierelement 10 ist im Querschnitt im Wesentlichen rechteckig. Es besteht aus einer Kappe 38 mit einer Wölbung, die das Rastelement 12 darstellt, und einem schalenförmig ausgebildeten Boden 39, gegen den die Kappe 38 mittels einer Druckfeder 11 vorgespannt ist. Die Kappe 38 weist Rastierschrägen 31 auf, über die das Arretierelement 10 mit den Rampen 41 des Synchronrings 14 (Figur 5) während des Vorsynchronisationsprozesses in Wirkverbindung stehen.

Figur 5 zeigt einen Synchronring 14 mit einer nach innen gerichteten Reibfläche 18 und einem Zahnkranz als Sperrverzahnung 16. Außenseitig besitzt er Vorsprünge 33, welche endseitig zur Schiebemuffe orientiert Rampen 41 aufweisen. Die Form der Rampen 41 ist komplementär zu der der Rastierschrägen 31 und hier zur Mittelachse hin schräg verlaufend ausgebildet.

### Bezugszahlenliste

- 1: Welle
- 2: Gangrad
- 3: Gangrad
- 4: Synchronisiervorrichtung
- 5: Synchronkörper
- 6: Schiebemuffenverzahnung
- 7: Außenverzahnung
- 8: Zähne
- 9: Schiebemuffe
- 10: Arretierelement
- 11: Druckfeder
- 12: Rastelement
- 13: Rastnut
- 14: Synchronring
- 15: Synchronring
- 16: Sperrverzahnung
- 17: Sperrverzahnung
- 18: Reibfläche von 14
- 19: Reibfläche von 15
- 20: Reibfläche
- 21: Reibfläche
- 22: Kupplungsring
- 22a: Kuppelverzahnung
- 22b: Kuppelverzahnung
- 23: Innenverzahnung
- 24: Grundkörper
- 25: verkürzte Zähne
- 26: Ringteil
- 27: Aufnahme
- 28: Zahnzwischenraum
- 29: Stützring
- 30: Nut
- 31: Rastierschräge
- 32: Vorsynchronisierungsrampe
- 33: Vorsprung
- 34: (nicht belegt)
- 35: Lücke
- 36: Außenwand
- 37, 37', 37": Verzahnungssegmente
- 38: Kappe
- 39: Boden
- 40: Fehlstelle
- 41: Rampe

## Patentansprüche

1. Synchronisiervorrichtung (4) eines Zahnräderwechselgetriebes, aufweisend einen Synchronkörper (5), einen Synchronring (14, 15) und eine Schiebemuffe (9) mit einer Schiebemuffenverzahnung (6), welche Zähne (8) und Zahnzwischenräume (28) aufweist und welche zumindest teilweise mit einer Außenverzahnung (7) des Synchronkörpers (5) in Eingriff ist, wobei in ein oder mehrere Aufnahmen (27) am Innenumfang der Schiebemuffe (9) Arretierelemente (10) angeordnet sind, welche zumindest in Neutralstellung in am Synchronkörper (5) ausgebildete Rastnuten (13) eingreifen, wobei die Arretierelemente (10) Rastierschrägen (31) aufweisen, **dadurch gekennzeichnet, dass** der Synchronring (14, 15) zumindest eine Rampe (41) aufweist, wobei die Arretierelemente (10) zumindest während des Vorsynchronisierens jeweils mittels einer Rastierschräge (31) mit der Rampe (41) in flächenhafter Wirkverbindung stehen.

2. Vorrichtung nach Anspruch 1, **dadurch gekennzeichnet, dass** die Schiebemuffenverzahnung (6) axial außenseitig von den Aufnahmen (27) verkürzte Zähne (25) aufweist.

3. Vorrichtung nach Anspruch 2, **dadurch gekennzeichnet, dass** die Arretierelemente (10) in die Schiebemuffe (9) eingepresst sind.

4. Vorrichtung nach Anspruch 2, **dadurch gekennzeichnet, dass** die Arretierelemente (10) mit der Schiebemuffe (9) stoffschlüssig verbunden sind.

5. Vorrichtung nach Anspruch 1, **dadurch gekennzeichnet, dass** die Arretierelemente (10) im Wesentlichen quaderförmige Außenkonturen (44) aufweisen sowie Rastelemente (12), welche in axiale Richtung Rastierschrägen (31) aufweisen.

6. Vorrichtung nach Anspruch 1, **dadurch gekennzeichnet, dass** der Synchronkörper (5) aus einem eine Innenverzahnung (23) aufweisenden Grundkörper (24) und einem separat von diesem spanlos aus Blech hergestellten, die Außenverzahnung (7) aufweisenden Ringteil (26) ausgebildet ist, wobei der Ringteil (26) mit dem Grundkörper (24) form- oder stoffschlüssig verbunden ist und die Rastnuten (13) aufweist.

7. Vorrichtung nach Anspruch 1, **dadurch gekennzeichnet, dass** die Außenverzahnung (7) aus mehreren Verzahnungssegmenten (37, 37', 37") ausgebildet ist, wobei die Rastnuten (13) zwischen den Verzahnungssegmenten (37, 37', 37") angeordnet sind.

8. Vorrichtung nach Anspruch 1, **dadurch gekennzeichnet, dass** die Arretierung und ein Gegenelement einen Endanschlag zur Begrenzung des Verschiebewegs der Schiebemuffe (9) und/oder eine Indexierung bilden.

## Claims

1. Synchronizing device (4) of a change speed gearbox, having a synchronizing body (5), a synchronizer ring (14, 15) and a slider sleeve (9) with a slider-sleeve toothing system (6) which has teeth (8) and tooth interspaces (28) and which is in engagement at least partially with an external toothing system (7) of the synchronizing body (5), locking elements (10) being arranged in one or more receptacles (27) on the inner circumference of the slider sleeve (9), which locking elements (10) engage, at least in the neutral position, into latching grooves (13) which are formed on the synchronizing body (5), the locking elements (10) having latching slopes (31), **characterized in that** the synchronizer ring (14, 15) has at least one ramp (41), the locking elements (10) being in full-surface-area operative contact in each case by means of a latching slope (31) with the ramp (41) at least during the presynchronization.

2. Device according to Claim 1, **characterized in that** the slider-sleeve toothing system (6) has teeth (25) which are shortened axially on the outside by the receptacles (27).

3. Device according to Claim 2, **characterized in that** the locking elements (10) are pressed into the slider sleeve (9).

4. Device according to Claim 2, **characterized in that** the locking elements (10) are joined to the slider sleeve (9) with a material-to-material bond.

5. Device according to Claim 1, **characterized in that** the locking elements (10) have substantially parallelepiped-shaped outer contours (44) and have latching elements (12) which have latching slopes (31) in the axial direction.

6. Device according to Claim 1, **characterized in that** the synchronizing body (5) is formed from a basic body (24) which has an internal toothing system (23) and a ring part (26) which is produced separately from the said basic body (24) from sheet metal without cutting and has the external toothing system (7), the ring part (26) being joined to the basic body (24) in a positively locking manner or with a material-to-material bond and has the latching grooves (13).

7. Device according to Claim 1, **characterized in that** the external toothing system (7) is formed from a plurality of toothing segments (37, 37', 37"), the latching grooves (13) being arranged between the toothing segments (37, 37', 37").

8. Device according to Claim 1, **characterized in that** the locking means and a mating element form an end stop for limiting the displacement travel of the slider sleeve (9) and/or form an indexing mechanism.

## Revendications

1. Dispositif de synchronisation (4) d'une boîte de vitesses à engrenages, présentant un manchon de synchroniseur (5), une bague de synchroniseur (14, 15) et un manchon coulissant (9) avec une denture de manchon coulissant (6), qui présente des dents (8) et des espaces interdentaires (28) et qui est en prise au moins partiellement avec une denture extérieure (7) du manchon de synchroniseur (5), dans lequel il se trouve dans un ou plusieurs logements (27) sur la périphérie intérieure du manchon coulissant (9) des éléments d'arrêt (10) qui s'engagent, au moins en position neutre, dans des rainures d'encliquetage (13) formées sur le manchon de synchroniseur (5), dans lequel les éléments d'arrêt (10) présentent des rampes d'encliquetage (31), **caractérisé en ce que** la bague de synchroniseur (14, 15) présente au moins une rampe (41), dans lequel les éléments d'arrêt (10) sont en liaison active de surface avec la rampe (41) au moins pendant la pré-synchronisation chaque fois au moyen d'une rampe d'encliquetage (31).

2. Dispositif selon la revendication 1, **caractérisé en ce que** la denture de manchon coulissant (6) présente axialement sur le côté extérieur des logements (27) des dents raccourcies (25).

3. Dispositif selon la revendication 2, **caractérisé en ce que** les éléments d'arrêt (10) sont pressés dans le manchon coulissant (9).

4. Dispositif selon la revendication 2, **caractérisé en ce que** les éléments d'arrêt (10) sont reliés en complémentarité de matière au manchon coulissant (9).

5. Dispositif selon la revendication 1, **caractérisé en ce que** les éléments d'arrêt (10) présentent des contours extérieurs essentiellement parallélépipédiques (44) ainsi que des éléments d'encliquetage (12), qui présentent des rampes d'encliquetage (31) en direction axiale.

6. Dispositif selon la revendication 1, **caractérisé en ce que** le manchon de synchroniseur (5) est composé d'un corps de base (24) présentant une denture intérieure (23) et d'une partie annulaire (26) produite séparément de celui-ci sans enlèvement de copeaux à partir de tôle et présentant la denture extérieure (7), dans lequel la partie annulaire (26) est assemblée au corps de base (24) par complémentarité de forme ou de matière et présente les rainures d'encliquetage (13).

7. Dispositif selon la revendication 1, **caractérisé en ce que** la denture extérieure (7) est formée de plusieurs segments de denture (37, 37', 37"), dans lequel les rainures d'encliquetage (13) sont disposées entre les segments de denture (37, 37', 37").

8. Dispositif selon la revendication 1, **caractérisé en ce que** l'arrêt et un élément opposé forment une butée d'extrémité destinée à limiter la course de déplacement du manchon coulissant (9) et/ou forment un indexage.
